# EUROPÄISCHE PATENTSCHRIFT

(11) **EP 0 874 700 B1**
(45) Veröffentlichungstag und Bekanntmachung des Hinweises auf die Patenterteilung: **08.01.2003**
(21) Anmeldenummer: 97952755.3
(22) Anmeldetag: 21.10.1997
(51) Int. Cl.: B09B 3/00, B03B 9/06

(54) **VERFAHREN ZUR TRENNUNG EINES GEMISCHES VON RESTABFÄLLEN**
METHOD FOR SEPARATING A MIXTURE OF RESIDUAL WASTES
PROCEDE DE TRI D'UN MELANGE DE DECHETS

(30) Priorität: 21.10.1996 DE 19643381; 02.12.1996 DE 19649901
(43) Veröffentlichungstag der Anmeldung: 04.11.1998
(60) Teilanmeldung: 02007839.0
(73) Patentinhaber: HERHOF UMWELTTECHNIK GMBH, D-35606 Solms (DE)
(72) Erfinder: HOFMANN, Hermann, D-35606 Solms (DE)
(74) Vertreter: Zinnecker, Armin, Dipl.-Ing.
(86) Internationale Anmeldenummer: EP9705811
(87) Internationale Veröffentlichungsnummer: WO98017410

(56) Entgegenhaltungen:
- EP-A- 0 521 685
- EP-A- 0 706 839
- WO-A-81/03029
- WO-A-83/02779
- DE-A- 3 128 528
- DE-A- 4 018 810
- DE-A- 4 434 611
- DE-A- 19 503 669
- T. OBERMEIER: "Abfallwirtschaftskonzept für Berlin und sein Umland" MUELL UND ABFALL., Bd. 22, Nr. 12, Dezember 1990, BERLIN DE, Seiten 753-765, XP000166026

## Beschreibung

Die Erfindung betrifft ein Verfahren zur Trennung eines Gemisches von Restabfällen.

Gemische von Restabfällen sollen getrennt werden, um eine für die jeweilige Fraktion passende Entsorgung durchführen zu können. Ziel der anzuwendenden Trennverfahren ist die möglichst sortenreine Trennung des Stoffgemisches. Restabfallgemische stellen in dieser Hinsicht allerdings sehr schwierige Stoffgemische dar. Die ständig wechselnde Zusammensetzung der Restabfälle erfordert Verfahren, die es ermöglichen, die Heteroginität des Vielstoffgemisches "Restabfall" zu ordnen, bevor es getrennt wird. Dabei haben sich Verfahren bewährt, die insbesondere nach der Stoffdichte unterscheiden, wobei die Transportmedien Gase oder Flüssigkeiten sein können.

Die bisher bekannten Verfahren und Vorrichtungen verteuern sich mit dem geforderten Reinheitsgrad der abzutrennenden Stoffkomponenten. Die stoffliche Verwertung wird begrenzt durch die stoffliche Reinheit und den im Wettbewerb mit frischen Rohstoffen erzielbaren Marktpreis.

Bei der Aufbereitung von kommunalen Restabfällen verbleiben Restfraktionen, die entweder deponiert oder verbrannt und deponiert werden müssen. Nach zukünftig geltenden Vorschriften ist für die Deponierung eine Restorganik von weniger als 3 % in Bauschuttdeponiegut und weniger als 5 % in Hausmülldeponiegut erforderlich. Um dies zu erreichen, muß eine sortenreine Selektierung inerter Stoffe und die Veraschung brennfähiger Stoffe durchgeführt werden mit den auch hier bestehenden Emissionsrisiken der Auswaschung.

Die bisher praktizierte biologisch-mechanische Aufbereitung der Restabfälle nach Abschöpfung der Wertstoffe durch getrennte Einsammlung hat zum Ziel, die organische Substanz in den Restabfällen weitestgehend abzubauen, um sich auf diesem Weg den geforderten Werten von 3 % bzw. 5 % Restorganik zu nähern. Hierdurch entstehen allerdings Anlagen mit sehr großem Raumbedarf, da die biologische Zersetzung schwerer abbaubarer organischer Substanz nur sehr langsam erfolgt (6 bis 8 Monate) und die Restabfälle während dieser ganzen Zeit einer technischen Kontrolle und Steuerung unterliegen. Danach erfolgt teilweise eine stoffliche Trennung mittels bekannter Klassierverfahren im erdfeuchten Zustand (ca. 35 %).

Aus der Literaturstelle WLB Wasser, Luft und Boden, 11-12/1995, Seite 60 ist ein Verfahren zur mechanisch-biologischen Abfallbehandlung bekannt, bei dem Abfälle mit organischen Anteilen verwertet werden. Es handelt sich um ein dynamisches Verfahren der mechanisch-biologischen, aeroben Abfallbehandlung, das mit einer mehrstufigen Intensivrotte in einer Rottetrommel arbeitet.

Aus der DE-OS 44 34 611 ist ein Verfahren zur biologisch-mechanischen Behandlung von Abfall bekannt, bei dem der angelieferte Müll gesichtet, zerkleinert und homogenisiert wird. Anschließend wird der Müll in einer Rotte einem biologischen Abbauprozeß unterzogen. Das Rotteprodukt wird nach der Rottung in eine organische und eine anorganische Fraktion separiert.

Aus der DE-PS 32 48 494 ist ein Verfahren zum Herstellen eines Brennstoffes für eine Müllverbrennungsanlage bekannt. Um die Herstellung eines schadstoffarmen Brennstoffes mit verbessertem Heizwert zu ermöglichen, wird Hausmüll in einer ersten Siebtrommel in Überlauf und Siebdurchgang aufgeteilt. Der Überlauf wird einer Eisen-Separation unterzogen. Der Siebdurchgang wird nach einem in einem Bioreaktor erfolgenden Kompostieren in einer zweiten Siebtrommel in eine als Kompost anfallende Feinfraktion und in einen Überlauf getrennt.

Aus der Literaturstelle "Müll und Abfall", Band 22, Nr. 12, Dezember 1990, Berlin (DE), S. 753-765; T. Obermeier et al.: "Abfallwirtschaft für Berlin und sein Umland" ist ein Verfahren zur Trennung eines Gemisches von Restabfällen bekannt, welches biologisch behandelt (biologische Vortrocknung), nämlich stabilisiert wird, und anschließend in eine brennbare Fraktion (zur Müllverbrennungsanlage, MVA) und in eine unbrennbare Fraktion (zur Hausmülldeponie, HM-Deponie) getrennt (Klassierung) wird, wobei die unbrennbare (deponierte) Fraktion entsprechend-den Deponievorschriften weniger als 5% organischer Restsubstanzen enthält.

Die DE-A-40 18 810 offenbart ein Verfahren zur Kompostierung von Hausmüll, der organische Bestandteile enthält, bei dem der Müll zunächst kompostiert und danach vorzugsweise in Ballen verpreßt wird. Die Kompostierung kann in einem geschlossenen Behälter unter Luftzuführung erfolgen. Die Kompostierung wird vorzugsweise durch Trocknung zum Stillstand gebracht, wenn die biologisch leichter zersetzbaren biologischen Bestandteile des Mülls abgebaut worden sind.

Aufgabe der Erfindung ist es, Verfahren der eingangs angegebenen Art vorzuschlagen, mit denen erreicht werden kann, daß in Restabfall enthaltene, nicht brennbare Stoffe weder in eine Verbrennungsanlage gelangen noch mit einem höheren organischen Anteil als 3 % bzw. 5 % deponiert werden.

Nach einem ersten Vorschlag wird diese Aufgabe durch die Merkmale des Anspruchs 1 gelöst. Das Gemisch wird - gegebenenfalls nach einer vorherigen Zerkleinerung und/oder Homogenisierung - biologisch behandelt, nämlich unter Zwangsbelüftung kompostiert und/oder stabilisiert. Dies geschieht in einem geschlossenen Behälter. Anschließend werden die Komponenten des derart behandelten Gemisches in eine brennbare Fraktion und in eine unbrennbare Fraktion getrennt. Die Trennung wird derart durchgeführt, daß die unbrennbare Fraktion weniger als 5 % organische Restsubstanz enthält. Die biologische Behandlung, also die Kompostierung und/oder Stabilisierung, wird als sogenannte Intensivrotte durchgeführt. Diese Intensivrotte wird für eine Dauer von fünf bis zehn Tagen, ferner vorzugsweise für eine Dauer von sechs bis acht Tagen, ferner vorzugsweise für eine Zeit von sieben Tagen durchgeführt. Das Material wird am Ende der Intensivrotte getrocknet. Die Intensivrotte wird also vorzugsweise durch Trocknung beendet. Die danach abgetrennte unbrennbare Fraktion, die auch als Inertfraktion bezeichnet werden kann, kann Mineralstoffe und/oder Fe-Metalle (Eisenmetalle) und/oder NE-Metalle (Nicht-Eisen-Metalle) enthalten.

Die Trennung der Fraktionen erfolgt durch eine Siebung und durch eine auschließende Windsichtung.

Vorzugsweise wird eine Flüssigklassierung nach der Siebung und Windsichtung durchgeführt.

Eine weitere vorteilhafte Weiterbildung ist dadurch gekennzeichnet, daß das Gemisch vor der biologischen Behandlung bzw. Zerkleinerung und/oder Homogenisierung stofflich verwertet wird. Besonders vorteilhaft ist es, wenn das Gemisch stattdessen oder zusätzlich nach der Siebung stofflich verwertet wird. Es findet also vorzugsweise eine stoffliche Verwertung des Gemisches statt, vorzugsweise nach der Siebung, ferner vorzugsweise vor der biologischen Behandlung bzw. Zerkleinerung und/oder Homogenisierung.

Das erfindungsgemäße Verfahren kann in einer Vorrichtung zum biologischen Behandeln eines Gemisches von Restabfällen durchgeführt werden. Die Vorrichtung besteht aus einem geschlossenen Behälter mit Zwangsbelüftung und einer Vorrichtung zum anschließenden Trennen des Gemisches in eine brennbare Fraktion und in eine unbrennbare Fraktion, vorzugsweise eine Siebvorrichtung und einen Windsichter und vorzugsweise eine Flüssigklassierungsvorrichtung.

Vorzugsweise ist eine Zerkleinerungsvorrichtung und/oder eine Homogenisierungsvorrichtung vorhanden. Es ist ferner vorteilhaft, eine Vorrichtung zur stofflichen Verwertung vorzusehen.

Durch die erfindungsgemäße Lösung wird erreicht, daß in Restabfall enthaltene, nicht brennbare Stoffe (z.B. Steine, Keramikteile, Sand, Glas, Metalle und sonstige Schwerstoffe) weder in eine Verbrennungsanlage gelangen noch mit einem höheren organischen Anteil als 3 % (für Bauschuttdeponie) und 5 % (für Hausmülldeponie) deponiert werden, und daß in der brennfähigen Fraktion die nicht brennbaren Stoffe auf weniger als 10 Gewichts-% reduziert werden. Dies wird gewährleistet durch das höchstmögliche Maß an Trennschärfe, das durch die erfindungsgemäßen Lösungen erreicht werden kann, wenn aus dem Restabfall die Feuchte und die biologisch leicht abbaubare organische Substanz entfernt werden.

Bei der Durchführung des erfindungsgemäßen Verfahrens können bekannte Anlagen mit Verfahren und Vorrichtungen zur Trennung von Restabfällen Verwendung finden, insbesondere Siebanlagen, Windsichtanlagen, Schwerkrafttrennanlagen, Wirbelstromtrennanlagen, und/oder Flotationstrennanlagen.

Durch die erfindungsgemäße Lösung kann in einer wesentlich kürzeren Zeit als bisher (ca. eine Woche) vor und/oder nach dem biologischen Abbau der leicht abbaubaren organischen Substanz aus dem getrockneten Restabfall (der Restabfall wird auf unter 15 % Restfeuchte getrocknet) durch Kombination von Trockenklassierung und Flüssigklassierung inerte und organische Fraktionen getrennt werden. Weiterhin kann erreicht werden, daß die in den Stoffen gebundenen Schadstoffe wasserunlöslich festgelegt sind oder - sofern sie mobil sind - bei dem Spülvorgang entfernt und nach Trennung durch mechanisch-biologische Maßnahmen aus dem Flüssigmedium separat in aufkonzentrierter Form entsorgt werden.

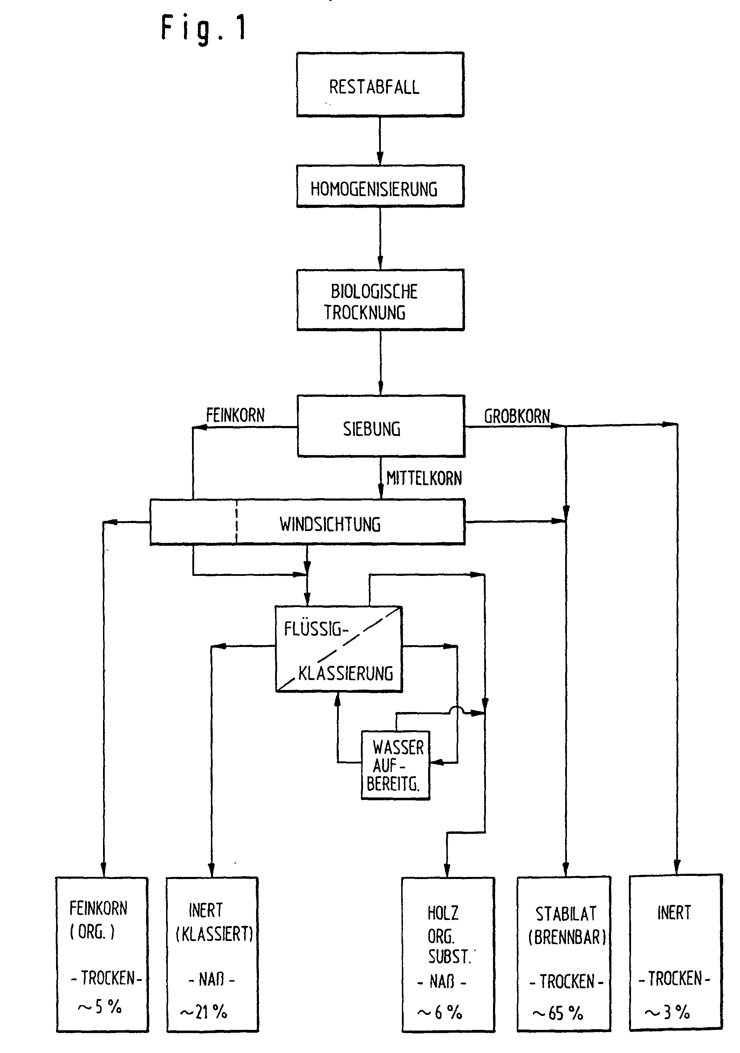

Ein Ausführungsbeispiel der Erfindung wird nachstehend anhand der beigefügten Zeichnung im einzelnen erläutert. In der Zeichnung zeigt
- Fig. 1: ein Ausführungsbeispiel für ein Verfahren und eine Vorrichtung nach dem ersten erfindungsgemäßen Vorschlag in einer schematischen Darstellung.

Bei dem in Fig. 1 dargestellten Ausführungsbeispiel wird der Restabfall, also das Restabfallgemisch, zerkleinert und homogenisiert. Anschließend findet die "biologische Trocknung" statt. Hierbei kann es sich um eine Kompostierung und/oder Stabilisierung in einem geschlossenen Behälter unter Zwangsbelüftung handeln. Das dabei entstehende Produkt wird einer Siebung unterworfen. Die Feinkornfraktion und die Mittelkornfraktion werden einem Windsichter zugeführt. Die Windsichtung kann für die Feinkornfraktion und die Mittelkornfraktion getrennt erfolgen. Durch die Windsichtung werden eine trockene organische Feinkornfraktion und eine trockene brennbare Stabilat-Fraktion abgetrennt. Die andere Fraktion wird einer Flüssigklassierung unterworfen. Der Flüssigklassiervorgang erfolgt also nach einer Sieb- und Sichtanlage für biologisch getrocknetes Stabilat. Durch die Flüssigklassierung entsteht eine nasse Inertfraktion. Die Flüssigkeit wird durch eine Wasseraufbereitungsanlage im Kreislauf geführt. Aus der Flüssigklassierung und der Wasseraufbereitung wird eine nasse Fraktion mit Holz und organischer Substanz abgetrennt.

Die bei der Siebung abgetrennte Grobkornfraktion wird in eine trockene brennbare Fraktion (Stabilat) und eine trockene Inertfraktion aufgeteilt. Zur trockenen brennbaren Fraktion (Stabilat) gehört auch die trockene organische Feinkornfraktion.

Vorzugsweise findet nach der Siebung in der Grobkornfraktion (trockene Inertfraktion und trockene brennbare Stabilatfraktion) eine stoffliche Verwertung statt. Auch vor der Zerkleinerung und Homogenisierung kann eine stoffliche Verwertung stattfinden. Die stoffliche Verwertung erfolgt vorzugsweise durch Wirbelstromscheidung, Handauslese, Magnetscheidung, optische Trennung oder durch ein anderes geeignetes Verfahren.

Das erfindungsgemäße Verfahren und Vorrichtung zur Trennung von Restabfällen können mittels Sieb-, Sicht-, Schwimm-, Sink- und/oder Flotationsabscheidung durchgeführt werden. Die einzelnen Stoffkomponenten annähernd gleicher Dichte können vor und/oder nach der biologischen Stabilisierung in einer Rottebox in brennbare und nicht brennbare Fraktionen getrennt werden. Dies kann mit einer Sortenreinheit von mehr als 95 % erfolgen. Durch die Trennung können Inertstoffe mit weniger als 3 % organischer Restsubstanz (für Deponieklasse I) und weniger als 5 % organischer Restsubstanz (für Deponieklasse II) hergestellt werden. Die Fraktion brennbarer Stoffe kann weniger als 10 % mineralische Bestandteile enthalten. Die Schwebefraktion der Flotationsflüssigkeit kann nach Abtrennung durch Flüssigsiebung und/oder Schwerkraftabscheidung im gereinigten Zustand als Bodenverbesserer und/oder Brennstoff Verwendung finden. Die Menge der übrigbleibenden, nicht stofflich verwertbaren Fraktion kann als Trockenstabilat in Ballen verpackt werden. Das Trockenstabilat kann lose oder in Ballen und/oder Briketts verbrannt werden.
Die Teilkomponenten der hergestellten Stoffe können mit anderen Stoffen gemischt werden. Die Flüssigklassierung kann vor der biologischen Trocknung der Restabfälle erfolgen. Sie kann aber auch nach der biologischen Trocknung der Restabfälle erfolgen. Die Flüssigklassierung der Schwerstoffraktion biologischer getrockneter Restabfälle kann nach einer Siebung, nach einer Siebung und Wirbelstromtrennung oder nach einer Siebung, Wirbelstromtrennung und/oder Windsichtung erfolgen, wobei die durch biologische Trocknung entstehende Hydrophobie die Abtrennung schwimmfähiger brennbarer Restabfallbestandteile fördert.

## Patentansprüche

1. Verfahren zur Trennung eines Gemisches von Restabfällen,
bei dem das Gemisch biologisch behandelt, nämlich in einem geschlossenen Behälter unter Zwangsbelüftung als Intensivrotte für eine Dauer von fünf bis zehn Tagen kompostiert und auf unter 15% Restfeuchte getrocknet wird,
und bei dem die Komponenten des Gemisches anschließend in eine brennbare Fraktion und in eine unbrennbare Fraktion getrennt werden,
wobei die Trennung der Fraktionen durch eine Siebung und durch eine anschließende Windsichtung der Feinkorufraktion und der Mittelkorufraktion erfolgt, wobei die bei der Siebung abgetrennte Grobkorufraktion in eine trockene brennbare Fraktion und eine trockene Inertfraktion aufgeteilt wird
und wobei die unbrennbare Fraktion weniger als 5% organische Restsubstanz enthält.

2. Verfahren nach Anspruch 1, **dadurch gekennzeichnet, daß** die Trennung der Fraktionen durch eine Flüssigklassierung erfolgt.

3. Verfahren nach Anspruch 1 oder 2, **dadurch gekennzeichnet, daß** das Gemisch vor der biologischen Behandlung zerkleinert und/oder homogenisiert wird.

4. Verfahren nach einem der vorhergehenden Ansprüche, **dadurch gekennzeichnet, daß** das Gemisch vor der biologischen Behandlung bzw. Zerkleinerung und/oder Homogenisierung und/oder nach der Siebung stofflich verwertet wird.

## Claims

1. Method for separating a mixture of residual wastes,
in which the mixture is biologically treated, more precisely is composted in a closed vessel under forced aeration as intensive rotting for a period of from five to ten days and is dried to less than 15% residual moisture,
and in which the components of the mixture are then separated into a combustible fraction and a non-combustible fraction,
the fractions being separated by screening and subsequent air classification of the fine fraction and the medium fraction, the coarse fraction separated off during screening being divided into a dry combustible fraction and a dry inert fraction
and the non-combustible fraction comprising less than 5% residual organic matter.

2. Method according to Claim 1, **characterized in that** the fractions are separated by a wet classification.

3. Method according to Claim 1 or 2, **characterized in that** the mixture is comminuted and/or homogenized before the biological treatment.

4. Method according to one of the preceding claims, **characterized in that** the mixture is subjected to materials recycling before the biological treatment or comminution and/or homogenization and/or after the screening.

## Revendications

1. Procédé de tri d'un mélange de déchets,
dans lequel le mélange est traité biologiquement, c'est-à-dire qu'il est composté dans un récipient fermé avec aération forcée en tant que pourrissage intensif pendant une durée de cinq à dix jours et il est séché jusqu'à moins de 15% d'humidité résiduelle,
et où les composants du mélange sont ensuite séparés en une fraction combustible et une fraction non combustible,
la séparation des fractions se produisant par un tamisage et par un criblage aéré subséquent de la fraction à grains fins et de la fraction à grains moyens, ainsi la fraction à grains grossiers séparée par le tamisage est répartie en une fraction combustible sèche une fraction inerte sèche,
et où la fraction incombustible contient moins de 5% de résidus organiques.

2. Procédé selon la revendication 1 **caractérisé en ce que** la séparation des fractions se produit par une classification fluide.

3. Procédé selon la revendication 1 ou 2 **caractérisé en ce que** le mélange est broyé et/ou homogénéisé avant le traitement biologique.

4. Procédé selon l'une quelconque des revendications précédentes **caractérisé en ce que** le mélange est enrichi avant le traitement biologique ou respectivement le broyage et/ou l'homogénéisation et/ou après le tamisage.
